# EUROPEAN PATENT APPLICATION

(11) **EP 1 784 033 A1**
(43) Date of publication of application: **09.05.2007**
(21) Application number: 07000682.0
(22) Date of filing: 15.04.2005
(51) Int. Cl.: H04Q 7/36

(54) **Method of reusing spreading codes**

(30) Priority: 30.04.2004 US 835724
(62) Divisional of application: 05252355.2
(71) Applicant: LUCENT TECHNOLOGIES INC., Murray Hill, New Jersey 07974-0636 (US)
(72) Inventor: Yifei, Yuan, Livingston, Essex, NJ 07039 (US)
(74) Representative: Sarup, David Alexander

(57) **Abstract**

A method of wireless data communication includes the step of transmitting a feedback indicator signal. The method, thereafter, includes the step of receiving a spreading code sharing signal in response to a measured relative phase difference associated with the feedback indicator signal, wherein spreading code sharing signal identifies a shared spreading code. In this way, one spreading code may be assigned to two or more transmission paths if the measured relative phase difference between their feedback indicator signals corresponds with minimal mutual interference. Consequently, two or more wireless units having a measured relative phase difference in the range of about 90 degrees and about 270 degrees, for example, may use the at least of the same spreading codes.

## Description

### BACKGROUND OF THE INVENTION

### I. FIELD OF THE INVENTION

The present invention relates to telecommunications, and more particularly to wireless communications.

### II. DESCRIPTION OF THE RELATED ART

Wireless communications systems provide wireless service to a number of wireless or mobile units situated within a geographic region. The geographic region supported by a wireless communications system is divided into spatially distinct areas commonly referred to as "cells." Each cell, ideally, may be represented by a hexagon in a honeycomb pattern. In practice, however, each cell may have an irregular shape, depending on various factors including the topography of the terrain surrounding the cell. Moreover, each cell can be further broken into two or more sectors. Each cell is commonly divided into three sectors, each having an angular span of 120 degrees.

A conventional cellular system comprises a number of cell sites or base stations geographically distributed to support the transmission and reception of communication signals to and from the wireless or mobile units. Each cell site handles voice communications within a cell. Moreover, the overall coverage area for the cellular system may be defined by the union of cells for all of the cell sites, where the coverage areas for nearby cell sites overlap to ensure, where possible, contiguous communication coverage within the outer boundaries of the system's coverage area.

Each base station comprises at least one radio and at least one antenna for communicating with the wireless units in that cell. Moreover, each base station also comprises transmission equipment for communicating with a Mobile Switching Center ("MSC"). A mobile switching center is responsible for, among other things, establishing and maintaining calls between the wireless units, between a wireless unit and a wireline unit through a public switched telephone network ("PSTN"), as well as between a wireless unit and a packet data network ("PDN"), such as the Internet. A base station controller ("BSC") administers the radio resources for one or more base stations and relays this information to the MSC.

When active, a wireless unit receives signals from at least one base station 10 or cell site over a forward link or downlink and transmits signals to at least one cell site or base station over a reverse link or uplink. There are many different schemes for defining wireless links or channels for a cellular communication system. These schemes include, for example, TDMA (time-division multiple access), OFDMA (orthogonal frequency-division multiple access), and CDMA (code-division multiple access) schemes.

In TDMA communication systems, the radio spectrum is divided into time slots. Each time slow allows only one user to transmit and/or receive. Thusly, TDMA requires precise timing between the transmitter and receiver so that each user may transmit their information during their allocated time.

In OFDMA systems, a carrier signal may be defined by a number (e.g., 1024) of sub-carriers or tones transmitted using a set of mathematically time orthogonal continuous waveforms. Each wireless channel may be distinguished by a distinct channelization tone. By employing orthogonal continuous waveforms, the transmission and/or reception of the tones may be achieved, as their orthogonality prevents them from interfering with one another.

In a CDMA scheme, each wireless channel is distinguished by a distinct spreading code (e.g., channelization code, spread spectrum code or Walsh code) that is used to encode different information streams. These information streams may then be modulated at one or more different carrier frequencies for simultaneous transmission. A receiver may recover a particular stream from a received signal using the appropriate Walsh code to decode the received signal.

Each base station using a spread spectrum scheme, such as CDMA, offers a number of Walsh codes, and consequently, can serve a corresponding number of users, within each sector of a cell. In the CDMA 2000 3G-1X system, for example, the number of Walsh codes made available by each sector for voice may be defined by the radio configuration ("RC") employed by the base station. The maximum number of Walsh codes available for an RC3 assignment is 64, while RC4 assignment, in contrast, supports a maximum of 128 Walsh codes. Under certain conditions, such as when the majority of users are in benign RF environment, the users are concentrated in the area near antenna or majority of the users are stationary, etc., the RF capacity of CDMA 2000 3G-1X may exceed the Walsh code capability of RC3 (radio configuration 3) assignment. An RC3 assignment may be expected to be exceeded when technologies, such as transmit diversity, an intelligent antenna(s), and/or a selectable mode vocoder(s) are introduced.

The number of Walsh codes made available by a base station may take into consideration variables including the transmit power requirements associated with the selected radio configuration. For example, an RC4 assignment typically requires a relatively longer spreading code and may have a greater transmit power requirement than an RC3 assignment, which is a relatively shorter spreading code. Consequently, a tradeoff exists between the power efficiency of the base station based on the RC configuration employed and the length/number of spreading codes made available within each sector of a cell. An RC4 assignment, for example, may degrade capacity by supporting a weaker coding rate than an RC3 assignment.

With the explosion of the Internet and the increasing demand for data, resource management has become a growing issue in cellular communication systems. Next generation wireless communication systems, such as those employing High Speed Downlink Packet Access ("HSDPA") and High Speed Uplink Packet Access ("HSUPA"), are expected to provide data services in support of Internet access and multimedia communication. Unlike voice, however, data communications may be relatively delay tolerant and potentially bursty. Data communications, as such, may not be efficient with dedicated links on the downlink or the uplink. More effective data communication may be enabled if the system employs one or more channels shared by a number of wireless units. By this arrangement, each of the wireless units on the downlink, for example, share available resources. Resources to be shared include, for example, the spreading codes.

As the demand for data services, such as HSDPA and HSUPA, for example, continues to grow, the sharing of spreading codes may be an increasing concern. While different radio configurations may provide a larger pool of available spreading codes, their usage may come at a performance tradeoff.

Consequently, a need exists for a method of managing shared available resources, such as spreading codes, to enhance system performance.

### SUMMARY OF THE INVENTION

The present invention provides a method for enabling the sharing of at least one spreading code amongst two or more wireless units. In one embodiment of the present invention, the method includes the step of transmitting a feedback indicator signal. Thereafter, a spreading code sharing signal may be received. This spreading code sharing signal may be generated in response to a measured relative phase difference associated with the transmitted feedback indicator signal. The spreading code sharing signal may identify a shared spreading code for use by more than one wireless unit. In response to receiving the shared spreading code signal, the wireless unit may communicate over a downlink and/or an uplink using the shared spreading code.

For example, at least one relative phase difference between at least two data transmission paths may be measured. For the purposes of the present invention, a data transmission path may correspond with a wireless unit communicating with wireless infrastructure (e.g., base station or Node B) over a downlink and/or an uplink. More particularly, the relative phase difference between two or more wireless units may be measured. The measuring of each wireless unit may rely on spatial diversity by examining the channel condition of each wireless unit at two or more points in space. Once the relative phase difference(s) is measured, wireless units may be grouped together to provide minimal mutual interference. For the purposes of the present invention, minimal mutual interference refers to quasi-orthogonality of the phase of a channel in use by a first wireless unit relative to the phase of the channel in use by a second wireless unit.

Corresponding with each data transmission path, a feedback indicator signal may be received at two or more points in space (e.g., two or more antennas). Thereafter, at least two data transmission paths may be grouped together if the measured relative phase difference between their associated feedback indicator signals corresponds with minimal mutual interference. The method may also include the step of assigning one spreading code to a group of data transmission paths. Transmission paths that have been grouped together may therefore share at least one spreading code. As such, if the measured relative phase difference between the feedback indicator signals of a first and second data transmission path is in the range of about 90 degrees and about 270 degrees, for example, these paths may be grouped together to share one or more spreading codes.

These and other embodiments will become apparent to those skilled in the art from the following detailed description read in conjunction with the appended claims and the drawings attached hereto.

### BRIEF DESCRIPTION OF THE DRAWINGS

The present invention will be better understood from reading the following description of non-limiting embodiments, with reference to the attached drawings, wherein below:
FIG. 1 depicts an embodiment of the present invention;
FIG. 2 depicts another embodiment of the present invention; and
FIG. 3 depicts another embodiment of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

The present invention provides a method for enabling the sharing of at least one spreading code amongst two or more wireless units. More particularly, the present invention provides a method of measuring the relative phase difference between two or more wireless units. The measuring of each wireless unit may rely on spatial diversity by examining its channel condition at two or more points in space. Once the relative phase difference(s) is measured, wireless units may be grouped together in support of to minimal mutual interference. For the purposes of the present invention, minimal mutual interference refers to the quasi-orthogonality of the phase of a channel in use by a first wireless unit relative to the phase of the channel in use by a second wireless unit.

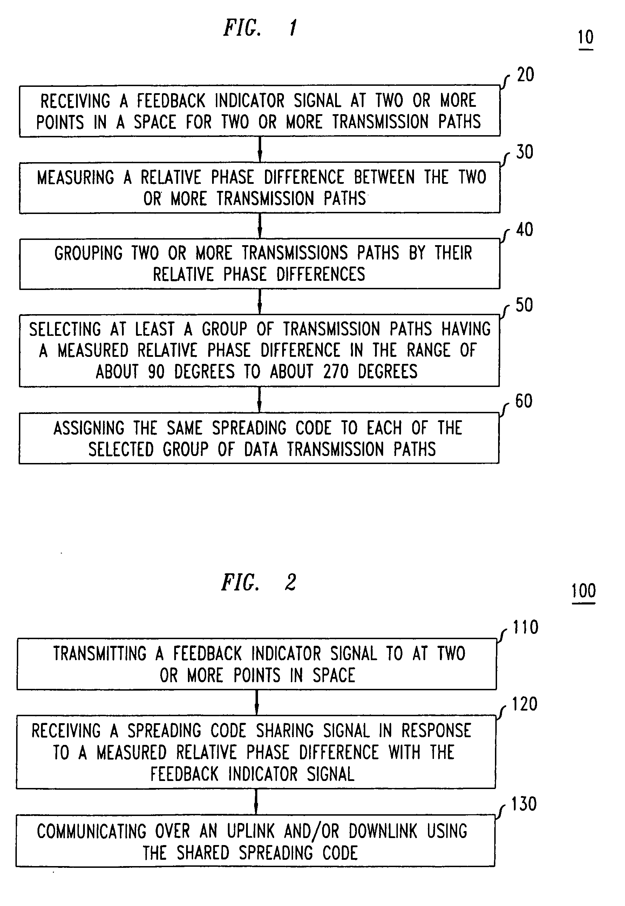

Referring to FIG. 1, a flow chart depicting an embodiment of the present 25 invention is illustrated. More particularly, an algorithmic method (10) is shown for enabling the sharing of at least one spreading code amongst two or more wireless units. It should be noted that the sharing of one or more spreading codes might arise, in one example of the present invention, with respect to data services such as High Speed Downlink Packet Access ("HSDPA") and/or High Speed Uplink Packet Access ("HSUPA").

The algorithmic method (10) of FIG. 1 may initially include the step of receiving a feedback indicator signal for each data transmission path (step 20).

For the purposes of the present invention, a data transmission path may correspond with a wireless unit communicating with wireless infrastructure over a downlink and/or an uplink. The feedback indicator signal may contain various data regarding its associated wireless unit, including relative phase information between received signals generated by multiple antennas of a base station, for example. Moreover, the feedback indicator signal may be received at two or more points in space in support of spatial diversity. Here, each point may correspond with at least one antenna. It should be noted in one example, each of the at least two antennas is vertically spaced by about 10 wavelengths. In an alternative arrangement, the antennas may be positioned in a cross slant configuration.

Once feedback indicator signal from each wireless unit is received, the algorithmic method (10) of FIG. 1 may thereafter measure the relative phase difference between each of the transmission paths (step 30). Here, the relative phase differential between the feedback indicator signals of each of the data transmission paths may be examined. In so doing, the relative phase of the channel facilitating the communication between each wireless unit and a corresponding base station(s) may be compared.

In one example, the algorithmic method (10) of FIG. 1 may subsequently include the step of grouping transmission paths by their relative phase differences (step 40). More particularly, two or more transmission paths may be grouped into groups by examining whether the relative phase difference(s). This grouping step may be performed in various phase increments, such as 45, 90 or 180 degrees, for example. Thusly, in one instance, transmission paths having a relative phase difference of 45 degrees between each other may fall within one grouping, while paths having a relative phase difference of 100 degrees would fall within a second grouping, where the phase increment for grouping is uniformly set to 90 degrees. It should be noted that in one example of the present invention, the phase increments might vary as a function of data traffic.

With the transmission paths within the cell of a base station(s) grouped into groups of two or more, the algorithmic method (10) of FIG. 1 may then select a group of two or more transmission paths having a relative phase difference(s) corresponding with minimal mutual interference (step 50). For the purposes of the present invention, minimal mutual interference refers to quasi-orthogonality of the phase of the channel in use by a first wireless unit relative to the phase of the channel in use by at least a second wireless unit. Consequently, a group of two or more transmission paths having a measured relative phase difference reflective of a quasi-orthogonality may be selected. For example, two or more transmission paths having measured relative phase difference within a range of about 90 degrees to about 270 degrees may be selected.

After the selection of a group of two or more transmission paths for corresponding with minimal mutual interference, the algorithmic method (10) of FIG. 1 may thereafter assigned one or more spreading codes (step 60). Here, each of the transmission paths may be designated to share a spreading code(s) given the quasi-orthogonality of the phase of their channels. By selecting groups of transmission paths that are quasi-orthogonal to each other, the cross interference, as experienced by each user, may be minimized. Consequently, the algorithmic method (10) of FIG. 1 may support increased efficiency by reusing available spreading code space.

Referring to FIG. 2, a flow chart depicting another embodiment of the present invention is illustrated. An algorithmic method (100) is shown which supports the sharing of at least one spreading code amongst two or more wireless units. More particularly, algorithmic method (100) may be performed in conjunction with algorithmic method (10) of FIG. 1.

The algorithmic method (100) of FIG. 2 initially includes the step of transmitting a feedback indicator signal for each data transmission path (step 110). As noted hereinabove, the feedback indicator signal may contain, for example, information regarding the channel quality experienced by the wireless unit transmitting a feedback indicator signal. It should be noted that the feedback indicator signal is transmitted to at two or more antennas in support of spatial diversity.

Once the feedback indicator signal has been transmitted by the wireless unit, the algorithmic method (100) of FIG. 2 includes receiving a spreading code sharing signal (step 120). The spreading code sharing signal is generated by the base station, for example, in response to algorithmic method (10) of FIG. 1. The spreading code sharing signal identifies to the wireless unit one or more spreading codes that the wireless unit may be share with another wireless unit. Thereafter, the algorithmic method (100) of FIG. 2 may include the communicating over a downlink and/or an uplink using the shared spreading code(s) (step 130).

### EXEMPLARY EMBODIMENT

The orthogonal code space is an important system resource for wideband code division multiple access downlink transmission. Orthogonal transmission may be achieved by allocating spreading codes to different control and data channels. For a high-speed downlink shared channel, such as HS-DSCH, multiple codes with spreading factor of 16 may be used for downlink transmission within a sub-frame of 2 ms, for example. The HS-DSCH may provide a highly spectral-efficient radio link and can potentially support a large number of users. However, the capacity of HS-DSCH may be limited considerably due to a shortage of available orthogonal codes. For example, there may be only 15 codes for a spreading factor of 16 available to the HS-DSCH.

The number of available spreading codes, however, may be much smaller than the 15 codes in the above scenario. This may be attributable, for example, to inefficient code space usage by an associated dedicated physical channel (e.g., "DPCH") for HSDPA users (e.g., carrying pilot and power control information).

In certain data services designs, an inactivity timer may be employed to ensure that code resources may be released for other users. However, there are certain data applications (e.g. chatty applications, TCP acknowledgements) for which long inactivity timers may be needed to ensure a small delay. As a result, these applications tend to use a significant portion of the code space yet also have relatively very low power requirements. Voice users, for example, may also make inefficient use of code space since codes remain assigned during periods of inactivity. This may lead to an imbalance between the available transmit power and the available spreading codes for a downlink shared channel, such as HS DSCH, an effect which may be further compounded by soft handoff on the downlink. Enhancements that provide power benefit, such as beamforming or closed loop transmit diversity, may also require improvements in the orthogonal code dimension so that the system capacity benefits may be realized. All these effects may result in a disproportionately large amount of power available for a downlink shared channel, such as HS-DSCH, as compared to the orthogonal codes.

In view of these issues, the scheduling of data intended for different wireless units (e.g., users' equipment) may be made to operate simultaneous over the downlink and/or uplink by utilizing two transmit antennas and reusing the available orthogonal code space. Here, the simultaneous scheduling of multiple users sharing the same set of orthogonal codes may ensure that the selected users have channels with minimal mutual interference - e.g., the phase of the channel connecting to a first wireless unit may be quasi-orthogonal to the phase of the channel connecting a second wireless unit. This quality may keep the cross interference low, as experienced by each user. With sufficient load, a high degree of probability exists that a group(s) of users satisfying this condition may be found in the cell. It should be noted that each wireless unit is assumed here to have one receive antenna.

Mutual interference may be achieved using a different technique. Here, a first wireless unit may be scheduled through a first antenna having a relatively strong quality from a channel, yet also a relatively weak channel from a second antenna. Other wireless units using the second antenna may be similarly selected. Although sufficient load may make it likely to find groups of users that satisfy this condition in the cell, the required loading may become relatively very large for multipath (e.g., frequency-selective) channels. Moreover, the overhead (e.g., associated DPCHs) support such large number of wireless units can easily drain the capacity of HS-DSCH traffic. Unless the users on the two antennas have similar channel strengths, the transmit powers from each antenna should be different to maximize the overall system capacity. Therefore, the effort to optimally allocate powers across two antennas may be entangled with other optimization algorithms in radio resource scheduling and thus increases the complexity of the scheduler. Also, imbalanced power distribution across two antennas may limit the efficiency of RF amplifiers.

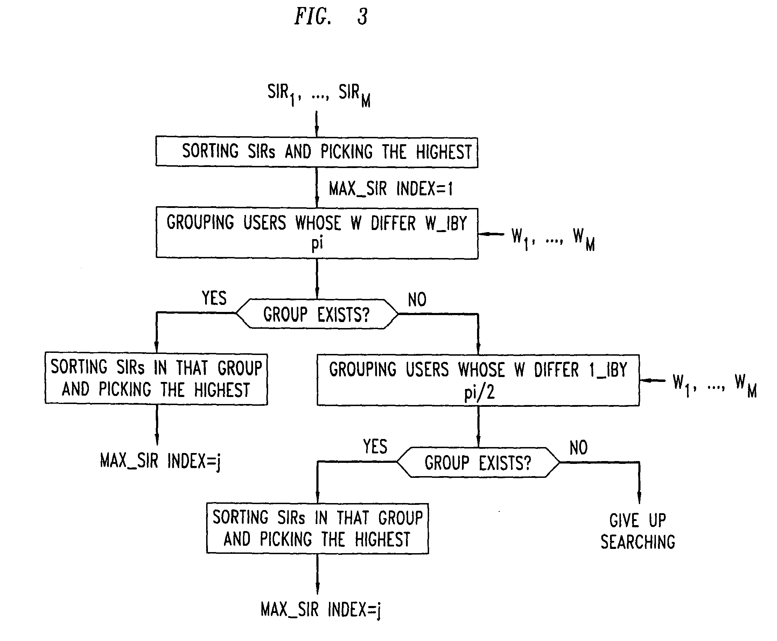

Referring to FIG. 3, another embodiment of the present invention is illustrated. More particularly, a flow chart 300 is shown depicting a two-user broadcast closed-loop transmit diversity ("BC-CLTD") scheme. Here, the B-CLTD approach may be employed for HSDPA traffic channels, for example, where two CLTD Mode 1 users having similar geometries may be simultaneously scheduled and share the same spreading code(s).

As detailed in flow chart 300, a search for two or more wireless users may be carried out for each sub-frame (e.g., each 2 ms). Considering there are two wireless users with similar geometries, the first unit of the group may have the highest signal to interference ratio. The second user of the group may be picked from the group who has a relative phase difference may be about 180 degree. If no such grouping exists, users having a relative phase difference of about 90 degree to support the selection of the user having the highest a signal to interference ratio. If no such group exists, these users may not share the same spreading code. It should be noted, however, that if the total number of users in a cell is large, the probability of finding a two-user group is high.

It should be noted that in a typical orthogonal code limited scenario, the present invention may improve cell throughput/capacity by about 50% over conventional techniques. There is no substantive changes should be required either at the wireless unit (e.g., user equipment) or in the channel coding/modulation of the base station in support of the present invention. BC CLTD may be built upon conventional two-antenna transmit diversity and may be supported by various product designs. It should be noted that the medium-access-channel for high speed ("MACH") might, as a consequence, require modification. The MACH manages radio resources for various channels, including the HS-DSCH, and also schedules high speed shared users. The MACH may be programmable and therefore may necessitate moving from the conventional non-broadcast CLTD to BC-CLTD using soft code.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as network elements, the wireless unit, the base station, a base station controller, a mobile switching center and/or a radar system. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Similarly, the phrase spreading code as used herein contemplates orthogonal continuous waveforms. Those skilled in the art will readily recognize that these and various other modifications, arrangements and methods can be made to the present invention without strictly following the exemplary applications illustrated and described herein and without departing from the spirit and scope of the present invention It is therefore contemplated that the appended claims will cover any such modifications or embodiments as fall within the true scope of the invention.

## Claims

1. A method of data communication comprising:
transmitting a feedback indicator signal;
receiving a spreading code sharing signal in response to a measured relative phase difference associated with the feedback indicator signal, wherein spreading code sharing signal identifies a shared spreading code.

2. The method of Claim 1, comprising:
communicating over at least one of a downlink and an uplink using the shared spreading code.

3. The method of Claim 1, wherein the feedback indicator signal is transmitted to at least two points in space, each point corresponds with at least one antenna.

4. The method of Claim 2, wherein the measured relative phase difference corresponds with minimal mutual interference.

5. The method of claim 3, wherein the measured relative phase difference is in the range of about 90 degrees and about 270 degrees.
